# EUROPEAN PATENT SPECIFICATION

(11) **EP 3 272 653 B1**
(45) Date of publication and mention of the grant of the patent: **29.04.2020**
(21) Application number: 17173221.7
(22) Date of filing: 29.05.2017
(51) Int. Cl.: B64D 33/02

(54) **ACOUSTIC PANELING FOR JET ENGINE INLET**
AKUSTIKVERKLEIDUNG FÜR TRIEBWEKSEINLASS
REVETMENT ACOUSTIQUE POUR ENTRÉE D'AIR D'UN RÉACTEUR

(30) Priority: 18.07.2016 US 201615212454; 16.02.2017 US 201715434378
(43) Date of publication of application: 24.01.2018
(60) Divisional application: 20165027.2
(73) Proprietor: The Boeing Company, Chicago, IL 60606-1596 (US)
(72) Inventor: HERRERA, Eric, Chicago, IL 60606-1596 (US); ELLEBY, Marta Baginska, Chicago, IL 60606-1596 (US); DUSCHI, Garry, Chigaco, IL 60606-1596 (US)
(74) Representative: Duxbury, Stephen

(56) References cited:
- GB-A- 2 252 076
- US-A- 5 785 919
- US-A1- 2008 075 916
- US-A1- 2009 045 009
- US-A1- 2015 315 972
- US-B1- 6 726 974

## Description

### Field

The disclosure relates to the field of acoustic control, and in particular, to panels that provide acoustic control such as sound damping/attenuating as a function of frequency.

### Background

Aircraft engines produce a great deal of noise during takeoff, flight, and landing. In order to increase passenger comfort and provide a more pleasant experience during flight, acoustic paneling may be provided that dampens and/or redirects noise from the engines during takeoff, flight, and landing. Acoustic paneling within an aircraft may further be utilized to reduce/redirect aircraft noise away from bystanders that may be proximate to the aircraft during takeoff and landing.

Acoustic paneling may comprise a structure specifically designed to absorb or reflect sound away from a sensitive area. Ideally, acoustic paneling for an aircraft would be sufficient to completely absorb noise perceived by passengers from engines and other components. However, such an amount of acoustic paneling for an aircraft would be very heavy and/or occupy a substantial amount of space within the aircraft, which in turn increases the expense of transporting passengers. Furthermore, acoustic paneling is often painstakingly assembled cell by cell in order to conform to the complex geometries of an aircraft. Such labor intensive processes further increase the expense of manufacturing the aircraft, and are therefore undesirable. Hence, designers of aircraft carefully balance concerns of comfort and cost when adding acoustic paneling to an aircraft.

US2015/0315972 discloses an acoustic liner that includes a first core that has a plurality of first core cells defined by a corresponding plurality of first core cell walls. The first core has a first core thickness. The acoustic liner also includes a second core that has a plurality of second core cells defined by a corresponding plurality of second core cell walls. The second core has a second core thickness, and the first core thickness and the second core thickness are unequal. The acoustic liner further includes a second fabric sheet coupled between the first core and the second core. Each of the plurality of second core cell walls generally is not coplanar with any of the plurality of first core cell walls.

US US2009045009 discloses a linear acoustic liner for an aircraft includes a cellular core having a first surface and an opposed second surface. A substantially imperforate back skin covers the first surface, and a perforate face skin covers the second surface of the core. The perforate face skin includes an outer face skin layer having a first plurality of spaced openings, an inner face skin layer having a second plurality of spaced openings, and a porous layer disposed between the outer face skin layer and the inner face skin layer. Each of the first plurality of spaced openings are substantially aligned with one of the second plurality of spaced openings.

GB2252076 discloses a noise attenuation panel comprises a cellular component which has wall portions which provide bounding surfaces for a multiplicity of cells which extend from the front face to the rear face of the component. In each cell in a region where the wall portions are continuous a cell dividing septum element is provided which extends across the cell and which is secured at a predetermined position in the cell to the wall portions of the cell to divide the cell into two subcells. The panel is manufactured by forming the cellular component without the cell dividing septum elements, bringing a septum sheet into engagement with the cellular component such that the edges of the wall portions at a face of the cellular component cut through the septum sheet to form a multiplicity of cell dividing septum elements and causing each cell dividing septum element to advance in the cell to a position at which it is secured to the wall portions of the cell.

### Summary

The invention relates to a method according to claim 1. Further optional details of the invention are disclosed in dependent claims 2-9.

The disclosure relates to techniques and automated manufacturing processes according to the invention that transform sheets of thermoplastic material into multi-celled acoustic paneling for an aircraft. Specifically, the disclosure relates to the folding, stamping, and/or extrusion of a planar sheet of thermoplastic material to form a multi-celled core of an acoustic panel.

A facesheet with multiple openings is applied over the cells of the core in order to form the cells into acoustic chambers (e.g., for damping/attenuating one or more frequencies of sound). Using this fabrication technique, the speed of creating the acoustic panel may be beneficially increased, and costs may be reduced. The acoustic panels discussed herein provide a further benefit because they are capable of undergoing plastic deformation (e.g., via the application of heat and pressure) in order to conform to complex surfaces within an aircraft (e.g., an engine cowling).

The disclosure also relates to an apparatus comprising an acoustic panel. The acoustic panel includes a core comprising multiple cells of thermoplastic having walls that are fused together. The panel also includes a facesheet fused to a surface of the core. The facesheet includes multiple openings through which sound waves enter the cells, resulting in acoustic control.

The disclosure also relates to a method for fabricating the acoustic panel. The method includes receiving a sheet of thermoplastic paper, conforming the sheet into rows that each comprise a three dimensional shape, and transforming the sheet into a multi-celled core. Transforming the sheet includes identifying fold lines separating the rows, folding the sheet at the fold lines in a pleat fold, thereby uniting upper surfaces of adjacent rows and uniting lower surfaces of adjacent rows; and compressing the rows of the folded sheet together in the presence of heat, causing adjacent rows to fuse together into cells. The method further includes applying a backing sheet to the core, and applying a facesheet to a surface of the core that includes openings which direct a portion of airflow across the facesheet into the cells, resulting in acoustic control.

The disclosure also relates to a method for performing acoustic control of jet engine noise using the acoustic panel. The method includes receiving airflow across openings of a facesheet of the panel that is fused to a multi-celled core of the panel, and directing the airflow into cells of the acoustic panel via the openings in the facesheet. The method also includes absorbing energy from the airflow as the airflow travels within the cells such that audible frequencies of sound generated by the airflow are attenuated by the cells, reflecting the airflow off of a backing sheet for the cells, and expelling the airflow from the cells via the facesheet.

The disclosure also relates to the provision of techniques and automated manufacturing processes that utilize (e.g., thermoplastic) material to mass fabricate multi-celled acoustic paneling for aircraft. Specifically, the disclosure enables acoustic paneling to be automatically fabricated via three dimensional (3D) printing and/or Automated Fiber Placement (AFP) techniques. A thermoplastic facesheet with porous sections is applied over a core of acoustic cells, and portions of the facesheet are fused into place onto the cells via a laser. Using this fabrication technique, the speed of creating the acoustic panel may be beneficially increased, and costs may be reduced. The acoustic panels discussed herein provide a further benefit because they are capable of undergoing plastic deformation (e.g., via the application of localized heat and pressure) in order to conform to complex surfaces within an aircraft (e.g., an engine cowling), even after fabrication is complete.

The disclosure also relates to a method comprising acquiring a core of acoustic cells, and fabricating a facesheet covering the core by: dispensing a base layer of material atop the acoustic cells while leaving openings into each of the acoustic cells, covering the openings by applying a liner of porous material atop the base layer, dispensing a cap layer of material atop liner while leaving gaps in the cap layer over the acoustic cells, and fusing the cap layer to the liner by directly radiating laser energy onto locations where the cap layer has been dispensed.

The disclosure also relates to a non-transitory computer readable medium embodying programmed instructions which, when executed by a processor, are operable for performing a method. The method includes acquiring a core of acoustic cells, and fabricating a facesheet covering the core by: dispensing a base layer of material atop the acoustic cells while leaving openings into each of the acoustic cells, covering the openings by applying a liner of material atop the base layer, dispensing a cap layer atop the liner while leaving gaps in the cap layer over the acoustic cells, and fusing the cap layer to the liner by directly radiating laser energy onto locations where the cap layer has been dispensed.

The disclosure also relates to a system that includes an Automated Fiber Placement (AFP) machine. The AFP machine includes a kinematic chain of actuators and rigid bodies, and an end effector. The end effector includes a dispenser that dispenses material, and a laser that radiates laser energy which fuses the material. The AFP machine further includes a controller that operates the end effector to operate in accordance with instructions in a Numerical Control (NC) program that directs the AFP machine to acquire a core of acoustic cells, and fabricates a facesheet covering the core by: dispensing a base layer of material atop the acoustic cells while leaving openings into each of the acoustic cells, covering the openings by applying a liner of porous material atop the base layer, dispense a cap layer of material atop the liner while leaving gaps in the liner over the acoustic cells, and fuse the cap layer to the liner by directly radiating laser energy onto locations where the cap layer has been dispensed.

The disclosure also relates to a method for performing acoustic control of jet engine noise via an acoustic panel. The method includes receiving airflow across openings of a facesheet of the panel, maintaining laminar airflow across the openings, directing the airflow into cells of the acoustic panel via the openings in the facesheet through a porous liner, absorbing energy from the airflow as the airflow travels within the cells.

The disclosure also relates to an apparatus comprising the acoustic panel. The panel includes a core comprising multiple cells having walls that are fused together, and a facesheet including multiple openings through which sound waves enter the cells, and a porous liner in the openings.

The disclosure also relates to a method for performing acoustic control of jet engine noise via the acoustic panel. The method includes receiving airflow across openings of a facesheet of the panel, arranging each of the openings with respect to airflow such that a dimension of the opening parallel to airflow is smaller than a dimension of the opening perpendicular to airflow, directing the airflow into cells of the acoustic panel via the openings in the facesheet through a porous liner, and absorbing energy from the airflow as the airflow travels within the cells.

### Description of the Drawings

The present invention is now described, with reference to the accompanying drawings. The same reference number represents the same element or the same type of element on all drawings.
FIG. 1 is a diagram of an aircraft.
FIG. 2 is a diagram illustrating an engine of an aircraft.
FIGS. 3-9 are diagrams illustrating a multi-celled acoustic panel.
FIGS. 10-12 are diagrams illustrating a facesheet of an acoustic panel.
FIGS. 13-14 are cross-sections illustrating components of an acoustic panel.
FIG. 15 is a circuit diagram illustrating acoustic control.
FIG. 16 is a flowchart illustrating a method for fabricating an acoustic panel.
FIG. 17 is a flowchart illustrating a method for utilizing an acoustic panel.
FIG. 18 is a block diagram of an engine utilizing an acoustic panel.
FIG. 19 is a flow diagram of aircraft production and service methodology.
FIG. 20 is a block diagram of an aircraft.
FIGS. 21-22 are diagrams illustrating a multi-celled acoustic panel.
FIG. 23 is a diagram illustrating a system for fabricating acoustic paneling.
FIG. 24 is a top view of completed acoustic paneling.
FIG. 25 is a top view a further acoustic paneling.
FIG. 26A is a flowchart illustrating a method for acoustic control.
FIG. 26B is a flowchart illustrating a method for fabricating acoustic paneling.
FIG. 27 is a block diagram of installed acoustic paneling.
FIG. 28 is a block diagram of a fabrication system for acoustic paneling.

### Description

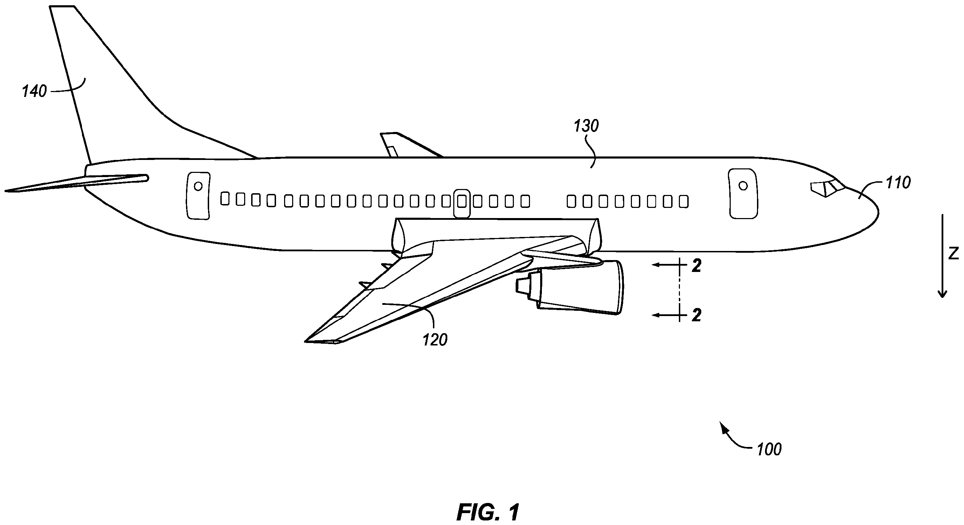

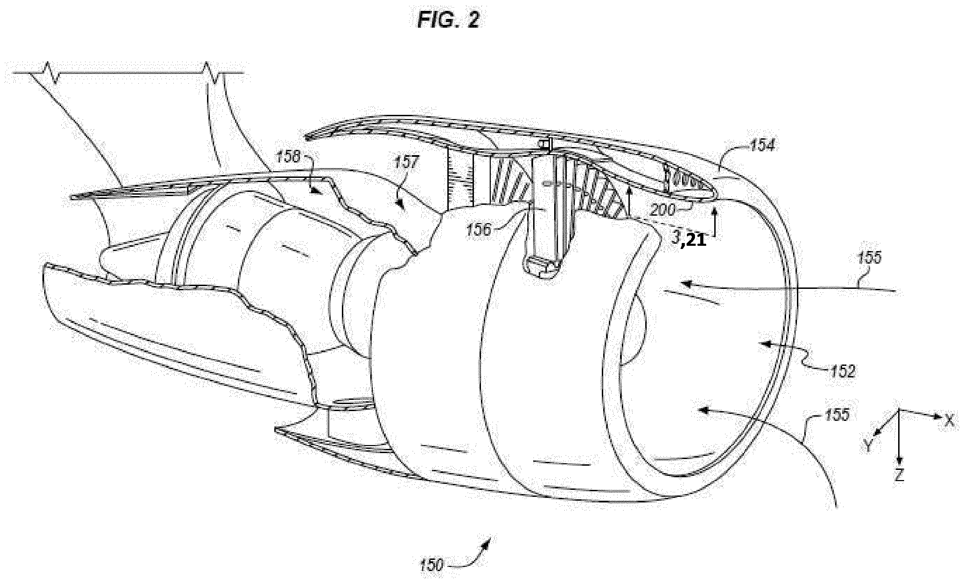

FIGS. 1-2 illustrate environments that may benefit from enhanced acoustic control. Specifically, FIG. 1 is a diagram of an aircraft 100. Aircraft 100 includes nose 110, wings 120, fuselage 130, tail 140, and engine 150 (e.g., a turbofan jet engine that generates noise perceptible to passengers). FIG. 1 also illustrates a downward direction (Z) for aircraft 100. FIG. 2 is a diagram of aircraft engine 150 indicated by view arrows 2 of FIG. 1. Engine 150 includes inlet 152 through which airflow 155 travels. Engine cowling 154 surrounds inlet 152, fan blades 156, compression section 157, and combustion section 158. As airflow 155 enters inlet 152 (e.g., during takeoff, flight, and landing), a substantial amount of noise is generated. This noise generated by inlet 152 may be audible to passengers inside of aircraft 100 at a level of volume that is undesirable. In order to control this noise, acoustic panel 200 is placed within inlet 152 such that sound waves within inlet 152 will be subject to control/damping/attenuation by acoustic panel 200. This beneficially increases passenger comfort.

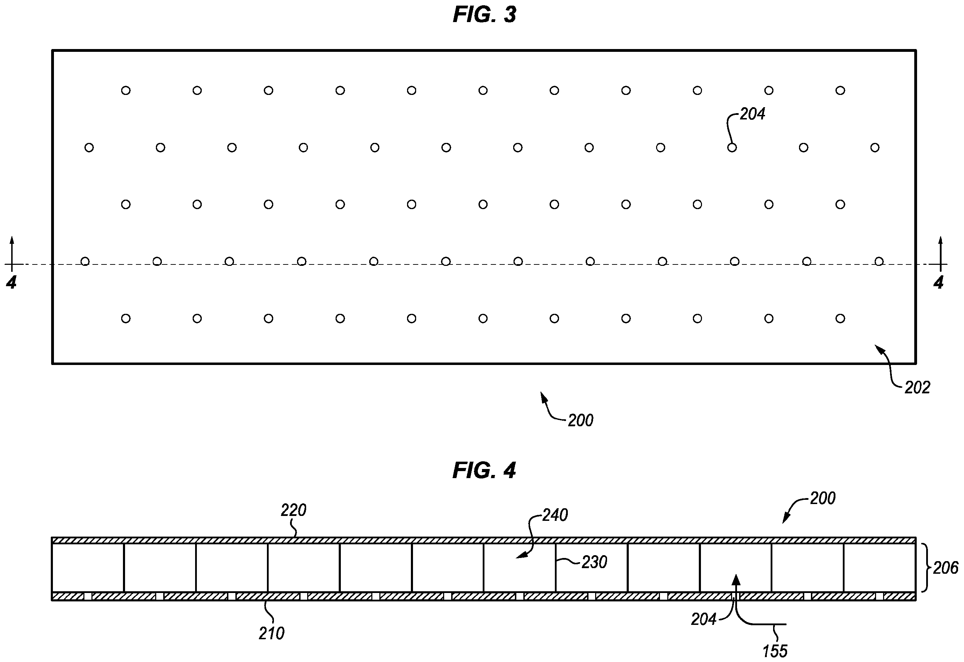

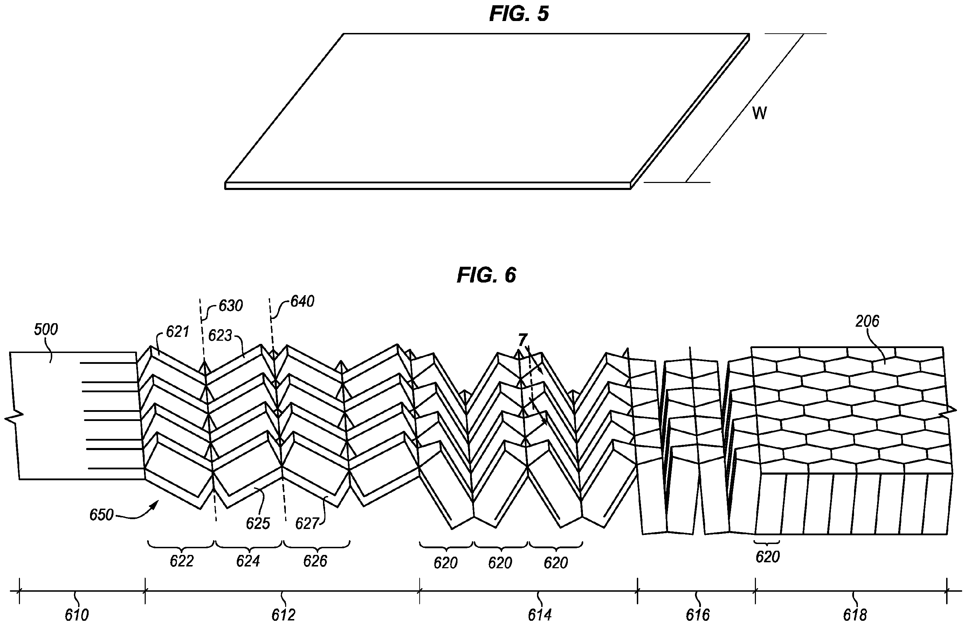

Further details of the features of acoustic panel 200 are described with regard to FIGS. 3-9. Specifically, FIGS. 3-4 illustrate a fully fabricated acoustic panel 200, while FIGS. 5-9 illustrate a fabrication process for creating a hexagonal "honeycomb" core of cells for panel 200. FIG. 3 is an underside view of panel 200 that illustrates a view of a face 202 of panel 200 indicated by view arrows 3 of FIG. 2. As shown in FIG. 3, the underside of acoustic panel 200 includes openings 204 through which airflow may enter and/or exit panel 200 for acoustic control. FIG. 4 illustrates a section cut view of a side of acoustic panel 200 illustrated by view arrows 4 of FIG. 3. FIG. 4 illustrates that panel 200 includes a core 206 which includes cells 240 defined by borders/walls 230. Each cell 240 in panel 200 is sandwiched between (i.e., encapsulated by) a facesheet 210 and a backing sheet 220. Facesheet 210 is exposed to airflow 155 across panel 200. Furthermore, as shown in FIG. 4, openings 204 allow sound waves/vibrations from airflow 155 to enter cells 240. These sound waves from airflow 155 may then be attenuated by travel within cells 240 and/or reflection off of backing sheet 220 (as will be illustrated in later FIGS. Further discussion of acoustic panel 200 in FIGS. 5-9 focuses upon the fabrication of acoustic panel 200. The fabrication techniques discussed herein beneficially forego traditional techniques of manually creating each cell of an acoustic panel.

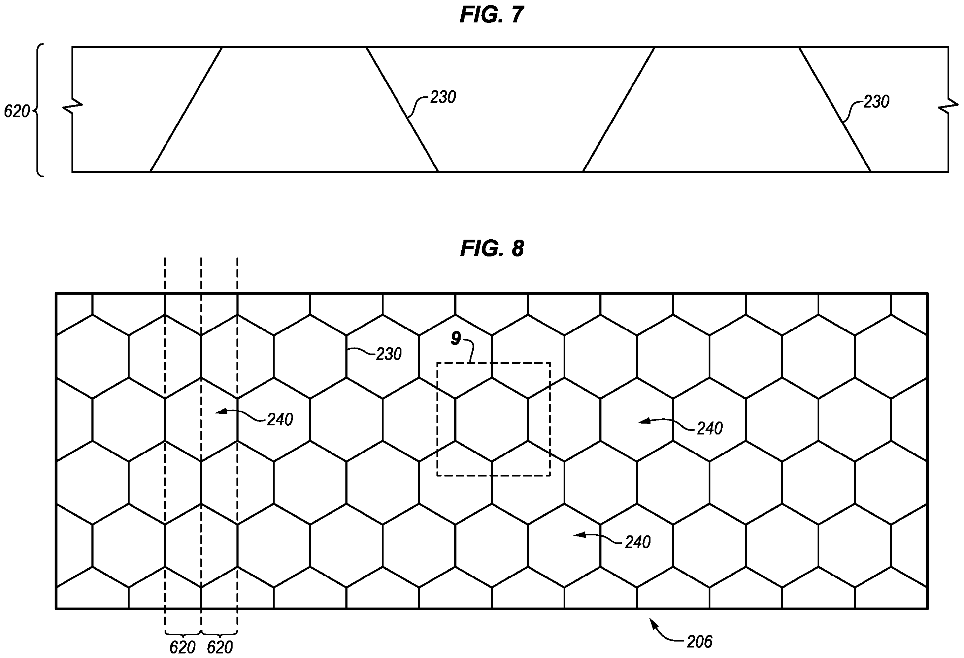

FIG. 5 illustrates that in order to form core 206 of cells 240, a sheet 500 of thermoplastic paper (e.g., Poly Ether Ether Ketone (PEEK)) may first be acquired. Sheet 500 is stamped and folded by machinery into individual rows 620 (e.g., row 622, row 624, row 626, etc.). As shown in FIG. 6, after stamping/conforming has been completed, each row 620 defines a three dimensional (3D) shape 650, which in this case is a series of half-hexagons shown in FIG. 7. Individual rows are mirrored with respect to their neighboring/adjacent rows. For example, row 624 is mirrored with respect to row 622 along fold line 630, and row 624 is further mirrored with respect to row 626 along fold line 640. When rows 622, 624, and 626 are folded together, upper surface 621 of row 622 is mated against upper surface 623 of row 624. Furthermore, lower surface 625 of row 624 is mated with lower surface 627 of row 626. When rows 620 are pressed against their neighbors via the application of sufficient heat and/or pressure, the mated surfaces (e.g., 621 and 623, 625 and 627) of these rows fuse together to form an integral, single seamless piece of thermoplastic. The process of stamping and/or folding sheet 500 into core 206 is shown to progress over time from left to right as indicated by regions 610, 612, 614, 616, and 618 of FIG. 6. Thus, core 206 may be formed from a single sheet 500 of thermoplastic.

FIG. 7 illustrates a view of an individual row 620. Specifically, the view of FIG. 7 is indicated by view arrows 7 of FIG. 6. As shown in FIG. 7, the three dimensional shape 650 defining each row 620 may include a series of walls 230 that form trapezoids, half hexagons, or any suitable shape (e.g., half-circles, "C" patterns, etc.). In this manner, when rows 620 are folded together, walls 230 may unite to form hexagonal cells 240 shown in FIG. 8. FIG. 8 further illustrates that each row 620 may form half of a hexagonal cell 240.

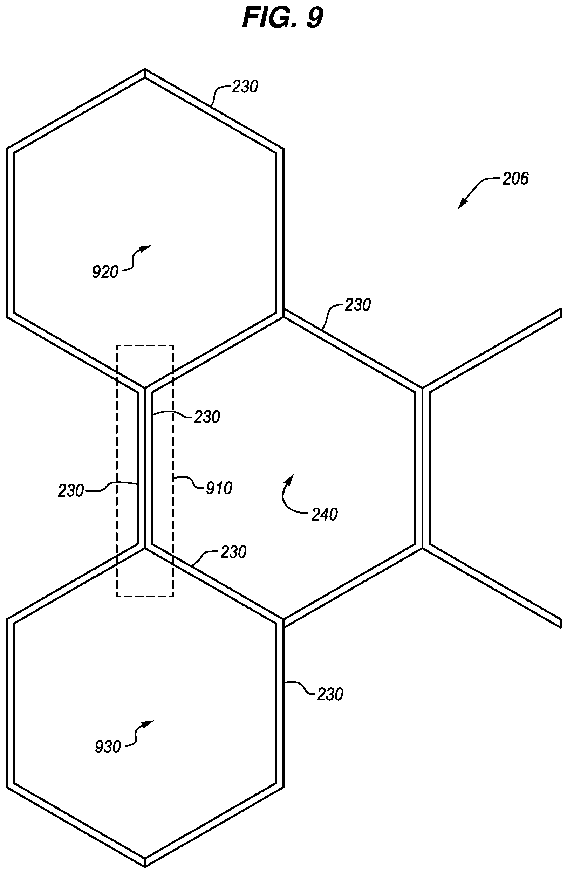

FIG. 9 illustrates a zoomed in view of a cell 240 corresponding to region 9 of FIG. 8. FIG. 9 makes clear that in the folded and stamped configuration, each hexagonal cell 240 may include multiple walls 230 defining a single side, as shown in region 910. This could potentially present a problem by enabling sound waves to travel between cells 920 and 930, which is undesirable because it inhibits the ability of these cells to perform acoustic control of specific frequencies of sound. This problem may be addressed by heating core 206 and pressing walls 230 together in region 910 (e.g., as part of the fold-stamping process), resulting in walls 230 plastically deforming and integrating into each other to create core 206 as a singly integral shape comprising unified, seamless walls 230 of thermoplastic material.

The techniques shown in FIGS. 5-9 are vastly beneficial, because they enable the automated creation of vast quantities of cells for acoustic panels. This substantially reduces labor costs involved in producing acoustic panels.

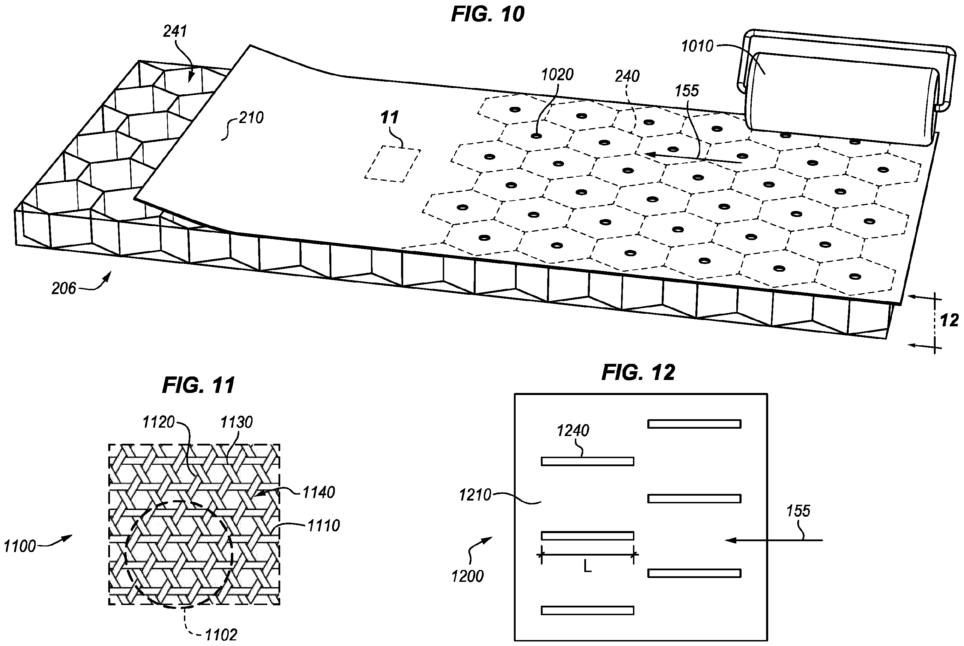

FIGS. 10-12 are diagrams illustrating application of a facesheet onto core 206 in order to form an acoustic panel. As shown in FIG. 10, facesheet 210 is disposed onto core 206, at surface 241 defined by cells 240. Facesheet 210 includes perforations 1020 and/or open interstices over each cell 240 in order to enable sound waves to enter cells 240 as airflow 155 rushes across panel 200. Facesheet 210 may be applied, for example, via a roller 1010. Where facesheet 210 comprises a thermoplastic, facesheet 210 may be structurally united/fused with cells 240 via the application of heat and pressure at roller 1010, causing facesheet 210 and cells 240 to form a single integral seamless whole of the same thermoplastic material. Facesheet 210 performs a substantially beneficial role for acoustic panel 200, because facesheet 210 defines a resistance of each cell 240 to receiving (and/or releasing) a sound wave. By calibrating this property of facesheet 210 to ensure that some, but not all airflow 155 may enter a cell 240, acoustic control (e.g., sound dampening) may be beneficially achieved by panel 200.

FIG. 11 illustrates facesheet 210 comprising a woven linear layer 1100. Layer 1100 includes an open weave 1102 of material formed from linear segments (1110, 1120, 1130) of thermoplastic. Here, the open weave 1102 may comprise any suitable weave that leaves open interstices 1140 between the linear segments (1110, 1120, 1130). The weave may further comprise a square weave, hexagonal weave, etc. Furthermore, the weave may be quantified by a "Percent Open Area" (POA) indicating a percentage of total area of the weave that is occupied by open interstices (i.e., instead of linear segments). It may be desirable to ensure that the POA and interstice sizes are selected such that each cell 240 receives sound energy directly via at least one interstice 1140. Weave 1102 may define multiple types of interstices 1140 of different sizes and/or shapes.

As shown in FIG. 12, facesheet 210 may comprise a layer of thermoplastic 1210 (e.g., of about 1 millimeter in thickness), which includes multiple perforations, openings, and/or slots 1240. Slots 1240 are elongated in an expected direction of airflow 155. That is, the longest dimension of slots 1240 (L) is measured in the direction of expected airflow 155, and airflow 155 enters cells 240 via slots 1240.

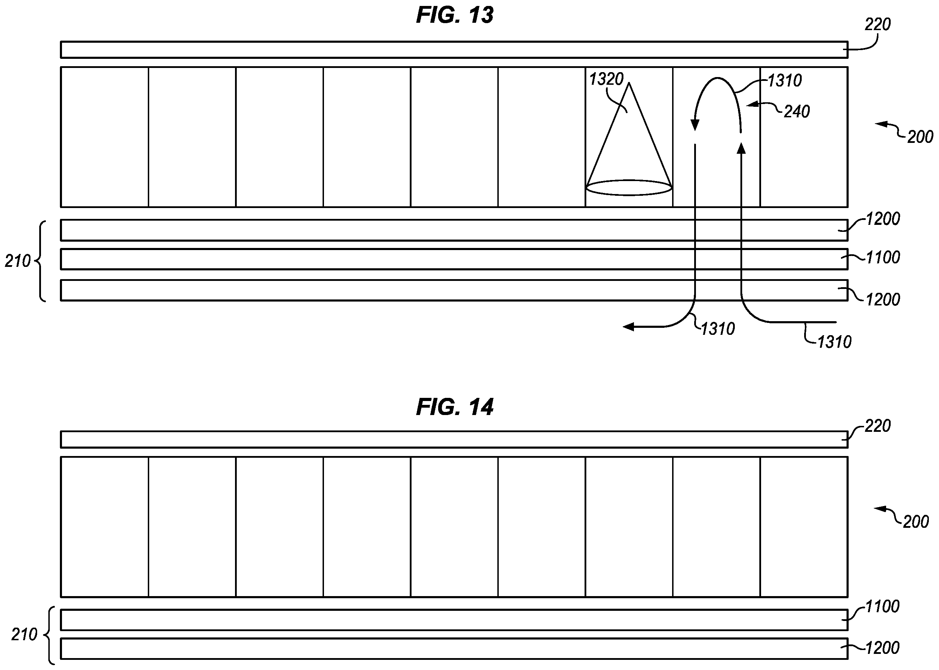

FIGS. 13-14 are cross-sections illustrating components of an acoustic panel 200. In FIG. 13, facesheet 210 preferably includes two perforated thermoplastic sheets 1200, and woven linear layer 1100. One of sheets 1200 is in contact with surface 241 of cells 240, and layer 1100 is in contact with both sheets 1200 (i.e., because it is sandwiched between both sheets). Airflow 1310 causes soundwaves to enter cell 240, reflect off of backing sheet 220. A septum 1320 of sound absorbing material (e.g., flexible foam) can be included within each cell 240, to further facilitate the damping/attenuation and/or control of sound. Here, airflow 1310 is directed through septum 1320 prior to reflecting off of backing sheet 220. FIG. 14 illustrates a further variation of an acoustic panel 200. In FIG. 14, facesheet 210 comprises a linear woven layer 1100 in contact with cells 240, and a perforated thermoplastic sheet 1200 forming a layer in contact with layer 1100.

The arrangement of materials and structure described above enables a designer to programmatically design acoustic panels 200 in a manner that specifically absorbs sound at desired frequencies. By way of analogy, each cell 240 in panel 200 may be equated to a circuit that includes a resistor, inductor, and capacitor (an RLC circuit). Sound level may be equated to voltage, mass flow of air into a cell 240 may be equated to amperage, and so on. The amount of sound attenuated for specific frequencies (e.g., the frequency response of the RLC circuit) may be controlled by adjusting various physical parameters pertaining to the cell 240.

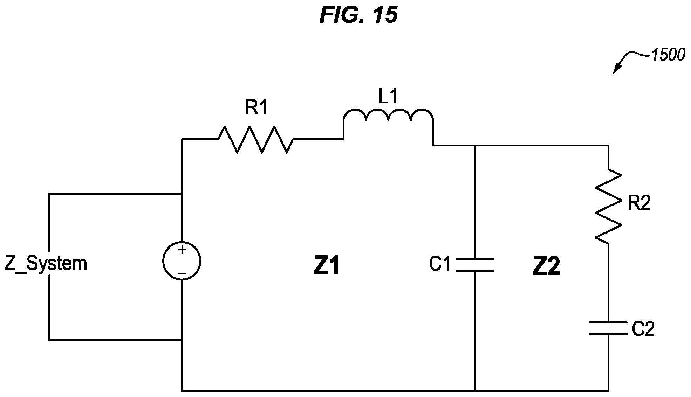

Utilizing the circuit diagram 1500 of FIG. 15, an impedance of an entire acoustic panel can be calibrated. R1 and R2 represent resistors of the RLC circuit of FIG. 15, C1 and C2 represent capacitors of the RLC circuit of FIG. 15, and L1 represents an inductor of the RLC circuit. From these features, Z1, Z2, and Z system (representing impedance of various portions of the circuit) may be calculated. Specifically, R1 corresponds to a resistance/damping of acoustic energy provided by a facesheet of the panel. L1 corresponds to impedance of air flow caused by the shape, number, and/or size of openings in the facesheet (and may, for example, be calibrated by adjusting POA for the facesheet). Continuing onward, C1 corresponds to a volume of air between a septum and the facesheet, while C2 corresponds to a volume of air between the septum and a backing sheet. R2 is defined by resistance/damping of acoustic energy caused by travel through the septum. Z1 may be calibrated by varying R1, L1, and C1 as desired. In a similar fashion, Z2 may be calibrated based on values for R2 and C2. In this manner, Z_system for the entirety of the acoustic panel may rapidly be calculated. For example, the POA of facesheet 210 may be chosen to provide a specific level of resistance to airflow into cell 240 that dampens a selected frequency of audible sound. Meanwhile, the thickness of facesheet 210 may provide an inductive response that regulates mass flow of air into cell 240. A septum 1320 within cell 240 may define capacitance (energy storage) of the cell, and further may resist airflow. Thus, volumes of free space within cell 240, as well as the total volume of cell 240 may be considered and programmatically controlled in a double Degree of Freedom (DOF) system in order to control the acoustic properties of cell 240 in order to control/dampen specific frequencies. This technique may be particularly helpful in scenarios where specific frequencies of noise from engine 150 are perceptible to passengers of aircraft 100 and known to cause discomfort to passengers of aircraft 100.

The structural design described above provides a further benefit when facesheet 210 and cells 240 are both formed from thermoplastic. Since acoustic panels 200 can be composed of thermoplastic (e.g., are entirely composed of thermoplastic), they may be heated and/or pressed in order to facilitate their shaping/contouring to any desired geometry within aircraft 100. This may be performed while preserving the integrity of facesheet 210, because facesheet 210 is capable of plastically deforming to conform to a desired surface geometry of aircraft 100. Conforming acoustic panel 200 to a complex geometry may be performed without damaging acoustic panel 200 or otherwise decreasing its effectiveness. These properties of acoustic panel 200 also substantially increase the ease of installing acoustic panel 200.

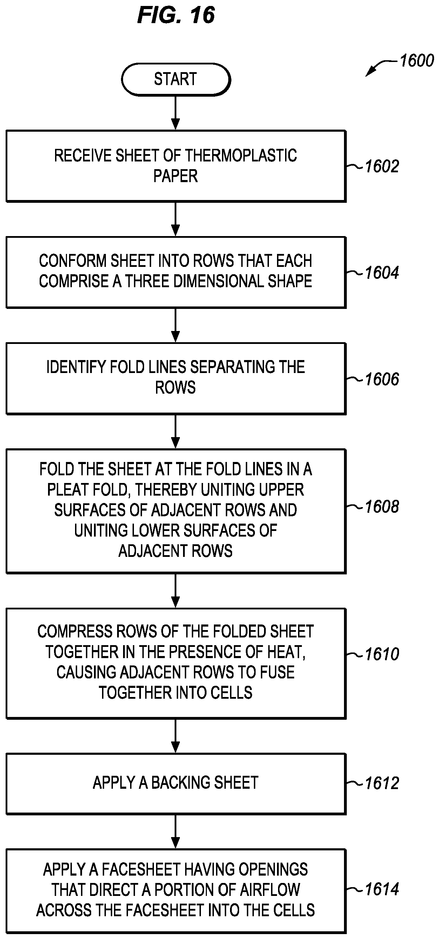

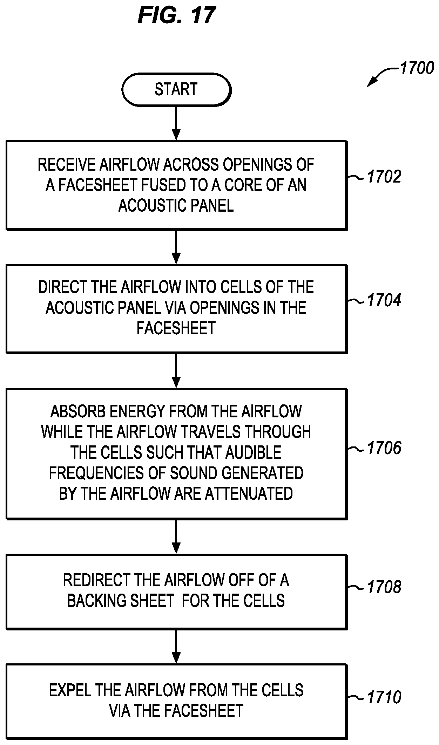

Illustrative details of the fabrication and operation of acoustic panel 200 will be discussed with regard to FIGS. 16 and 17. Specifically, FIG. 16 describes fabrication of acoustic panel 200, while FIG. 17 describes operation of acoustic panel 200. Assume, that a thermoplastic sheet 500 has been received for forming into acoustic panel 200.

FIG. 16 is a flowchart illustrating a method 1600 for fabricating an acoustic panel. The steps of method 1600 are described with reference to aircraft 100 and panel 200 of FIGS. 1-2, but those skilled in the art will appreciate that method 1600 may be performed in other systems. The steps of the flowcharts described herein are not all inclusive and may include other steps not shown. The steps described herein may also be performed in an alternative order.

According to FIG. 16, sheet 500 of thermoplastic is received and is subdivided into rows 620 (step 1602). Each row may comprise an equal portion of sheet 500, spanning across a width (FIG. 5, W) of sheet 500. Sheet 500 is then conformed/stamped into rows 620, such that each row 620 comprises a three dimensional shape 650 (step 1604). For example, after stamping, adjacent rows 620 may be mirrored versions of the three dimensional shape. Next, sheet 500 is transformed/shaped into multi-celled core 206 by identifying fold lines (e.g., 630, 640) separating rows 620 (step 1606), and folding sheet 500 at the fold lines in a pleat fold (also known as an "accordion fold), which cause upper surfaces of adjacent rows to unit and also causes lower surfaces of adjacent rows to unite (step 1608). Specifically as shown in FIG. 6, for row 624, sheet 500 may be folded along fold lines (630, 640) with respect to adjacent rows (622, 626). This mates upper surface 621 of row 622 against upper surface 623 of row 624, and further mates lower surface 625 of row 624 with lower surface 627 of row 626. The rows of the folded sheet 500 are also compressed together in the presence of heat, causing adjacent rows to fuse together into cells 240 (step 1610). This combines mated surfaces of sheet 500 together to integrate them into a unified, seamless single core 206.

After core 206 of cells 240 has been formed by folding-stamping rows 620 in the manner described above, backing sheet 220 is applied to core 206 (step 1612), as is facesheet 210 (step 1614). Facesheet 210 may then be fabricated to exhibit a desired POA, based on the cell size for core 206. For example, facesheet 210 may be punched with holes/slots in a predefined pattern corresponding to the cells of core 206. Facesheet 210 includes openings that are aligned to direct a portion of airflow 155 across facesheet 210 into cells 240, resulting in acoustic control. Furthermore, facesheet 210 may be fused to core 206 to combine both of these elements into one integral piece of fused material. This completes acoustic panel 200.

FIG. 17 is a flowchart illustrating a method 1700 for utilizing an acoustic panel 200. Assume, that acoustic panel 200 has been installed on aircraft 100 (e.g., at engine 150) for the purpose of damping/attenuating noise generated by inlet 152. As airflow 155 travels along inlet 152, facesheet 210 receives airflow 155 (step 1702). Facesheet 210 is integral with (i.e., combined/fused with to form a single integral whole) and made from the same thermoplastic material as cells 240. Facesheet 210 directs soundwaves from airflow 155 into a cell 240 of acoustic panel 200, via openings 204 in facesheet 210 (e.g., perforations 1020, interstices 1140, and/or slots 1240) (step 1704). Cell 240 absorbs energy from the sound waves as the sound waves travel through cell 240, such that audible frequencies (e.g., 20Hz to 20kHz) of sound generated by airflow 155 are attenuated (step 1706). Furthermore, airflow 155 is redirected off of backing sheet 220 of cell 240 (step 1708), and expelled outward from cell 240 via facesheet 210 (step 1710). These steps of directing, absorbing, reflecting, and expelling airflow for cells occurs as a continuous process (e.g., multiple times) as airflow continues across cells 240.

Using methods 1600-1700, acoustic paneling may be fabricated quickly and efficiently, and may be utilized by an aircraft to increase passenger comfort. Furthermore, the acoustic panels discussed herein, because they are thermoplastic, are capable of being fabricated substantially planar, heated and/or pressed, and then shaped/formed to conform with complex geometries of the aircraft. This enhances both the ease of manufacturing panel 200, and the ease of installing panel 200.

### Examples

In the following examples, additional processes, systems, and methods are described in the context of acoustic panels used for acoustic control (e.g., damping/attenuating, or enhancing, a sound).

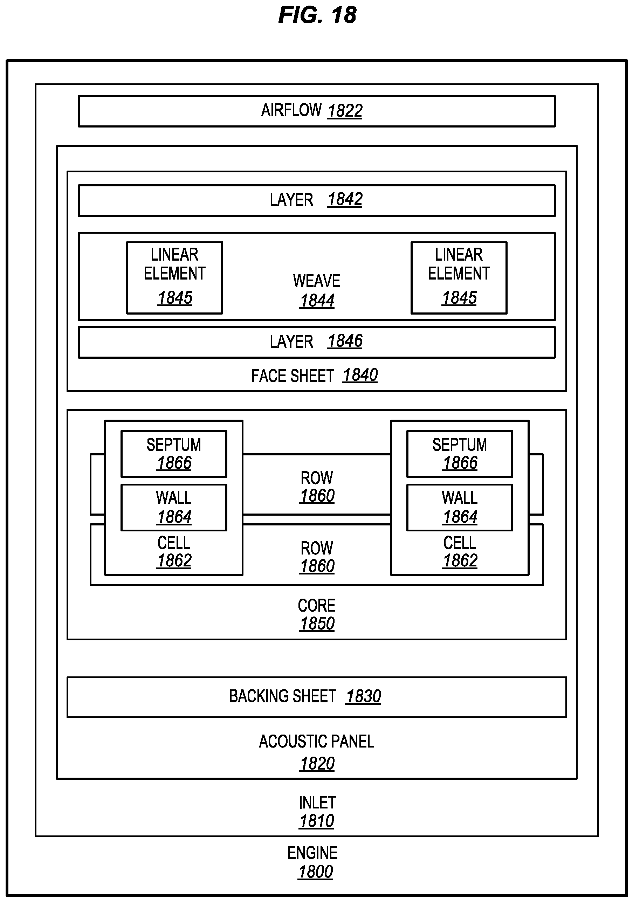

FIG. 18 is a block diagram of an engine 1800 utilizing an acoustic panel 1820.. As shown in FIG. 18, acoustic panel 1820 is located within inlet 1810. Panel 1820 includes backing sheet 1830, and core 1850, which has been folded and heated to form rows 1860 which define cells 1862. Each cell 1862 is surrounded by walls 1864, and includes a sound damping/attenuating septum 1866. Furthermore, each cell 1862 is covered by facesheet 1840, which include layers of thermoplastic 1842 and 1846, as well as a weave 1844 of linear elements 1845. Airflow 1822 travels across facesheet 1840, and soundwaves from airflow 1822 are dampened/attenuated by cells 1862.

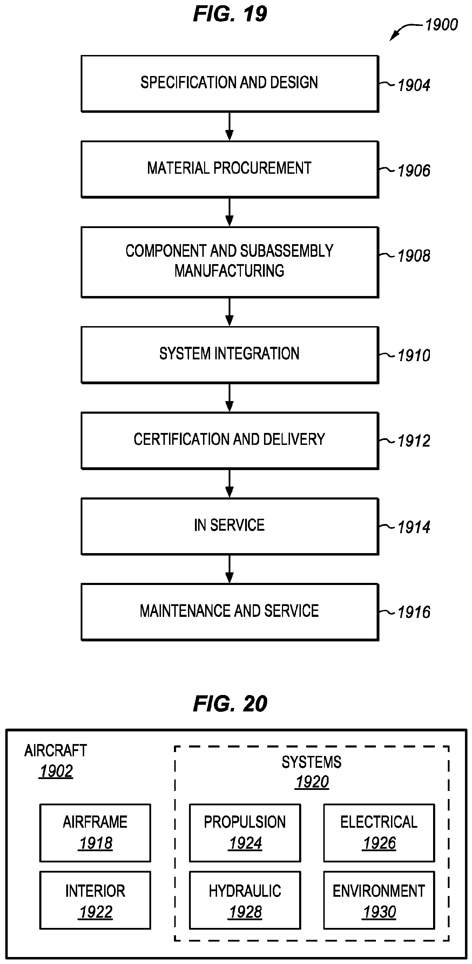

Referring more particularly to the drawings, the disclosure may be described in the context of an aircraft manufacturing and service method 1900 as shown in FIG. 19 and an aircraft 1902 as shown in FIG. 20. During pre-production, exemplary method 1900 may include specification and design 1904 of the aircraft 1902 and material procurement 1906. During production, component and subassembly manufacturing 1908 and system integration 1910 of the aircraft 1902 takes place. Thereafter, the aircraft 1902 may go through certification and delivery 1912 in order to be placed in service 1914. While in service by a customer, the aircraft 1902 is scheduled for routine maintenance and service 1916 (which may also include modification, reconfiguration, refurbishment, and so on). Apparatus and methods embodied herein may be employed during any one or more suitable stages of the production and service method 1900 (e.g., specification and design 1904, material procurement 1906, component and subassembly manufacturing 1908, system integration 1910, certification and delivery 1912, service 1914, maintenance and service 1916) and/or any suitable component of aircraft 1902 (e.g., airframe 1918, systems 1920, interior 1922, propulsion 1924, electrical 1926, hydraulic 1928, environmental 1930).

Each of the processes of method 1900 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 20, the aircraft 1902 produced by exemplary method 1900 may include an airframe 1918 with a plurality of systems 1920 and an interior 1922. Examples of high-level systems 1920 include one or more of a propulsion system 1924, an electrical system 1926, a hydraulic system 1928, and an environmental system 1930. Any number of other systems may be included. Although an aerospace example is shown, the principles of the invention may be applied to other industries, such as the automotive industry.

As already mentioned above, apparatus and methods disclosed herein may be employed during any one or more of the stages of the production and service method 1900. For example, components or subassemblies corresponding to production stage 1908 may be fabricated or manufactured in a manner similar to components or subassemblies produced while the aircraft 1902 is in service. Also, one or more of the disclosed apparatus methods or a combination thereof may be utilized during the production stages 1908 and 1910, for example, by substantially expediting assembly of or reducing the cost of an aircraft 1902. Similarly, one or more of the disclosed apparatus methods or a combination thereof may be utilized while the aircraft 1902 is in service, for example and without limitation, to maintenance and service 1916. For example, the techniques and systems described herein may be used for steps 1906, 1908, 1910, 1914, and/or 1916, and/or may be used for airframe 1918 and/or interior 1922. These techniques and systems may even be utilized for systems 1920, including for example propulsion 1924, electrical 1926, hydraulic 1928, and/or environmental 1930.

Panel 200 may comprise a portion of airframe 1918, and is manufactured during component and subassembly manufacturing 1908. Panel 200 may then be assembled into an aircraft in system integration 1910, and may for example be heated in order to facilitate its insertion and contouring into a portion of airframe 1918. Panel 200 may then be utilized in service 1914 to reduce noise until wear renders panel 200 unusable. Then, in maintenance and service 1916, panel 200 may be discarded and replaced with a newly manufactured panel.

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

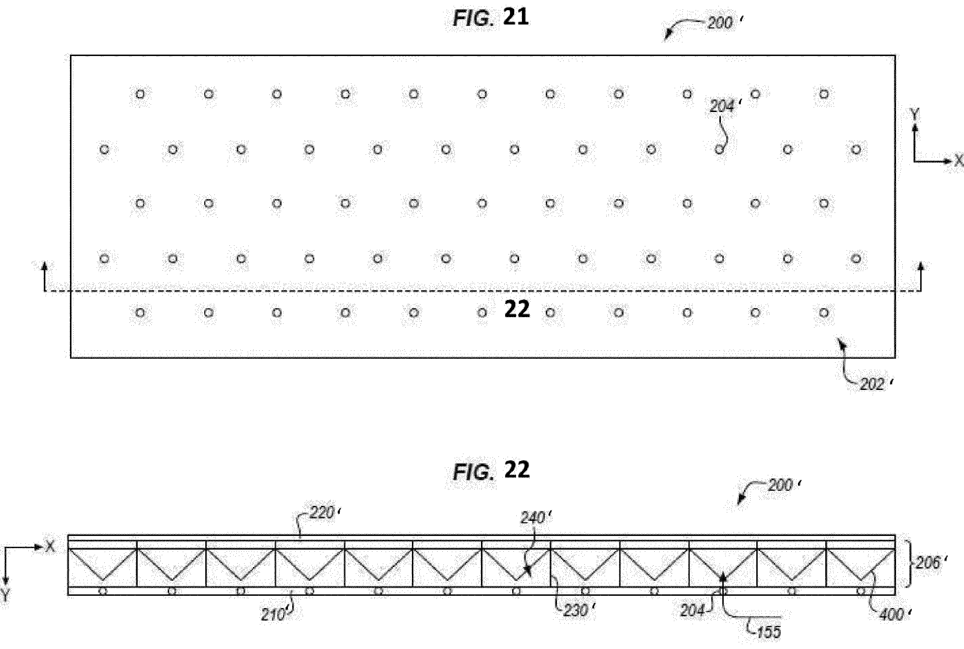

Further details of the features of acoustic panel 200' are described with regard to FIGS. 21-22. Specifically, FIGS. 21-22 illustrate a fully fabricated acoustic panel 200'. FIG. 21 is an underside view of panel 200' that illustrates a view of a face 202' of panel 200' indicated by view arrows 21 of FIG. 2. As shown in FIG. 21 face 202' of acoustic panel 200' includes openings 204' through which airflow may enter and/or exit panel 200' for acoustic control. The face 202' of acoustic panel 200' may include a facesheet having openings 204' which are designed to provide low drag. FIG. 22 illustrates a section cut view of a side of acoustic panel 200' illustrated by view arrows 22 of FIG. 21. FIG. 22 illustrates that panel 200' includes a core 206' which includes cells 240' defined by borders/walls 230'. Each cell 240' in panel 200' is sandwiched between (i.e., encapsulated by) a facesheet 210' and a backing sheet 220', and each cell 240' may include a septum 400' that absorbs and controls, acoustic energy. Facesheet 210' is exposed to airflow 155 across panel 200'. Furthermore, as shown in FIG. 22, openings 204' allow sound waves/vibrations from airflow 155 to enter cells 240'. These sound waves from airflow 155 may then be attenuated by travel within cells 240' and/or reflection off of backing sheet 220'.

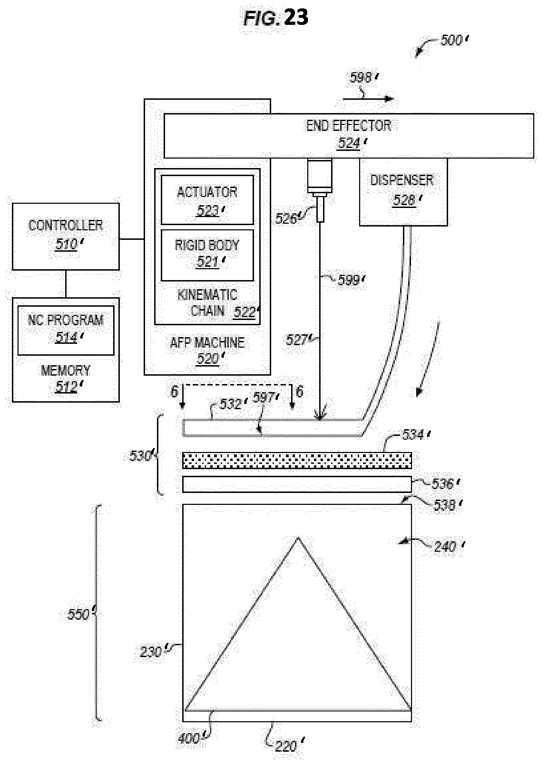

Further discussion of acoustic panel 200' will be made with regard to FIG. 23, which illustrates a system that actively fabricates a facesheet. The fabrication techniques discussed herein beneficially forego traditional techniques of manually creating each cell of an acoustic panel, and utilize thermoplastic (e.g., Polyether ether ketone (PEEK) or Polyether ketone ketone (PEKK) or similar) materials in order to ensure that various different layers, liners, etc. may be bonded together via heat without a need for supplementary adhesives. Hence, an acoustic panel may be fabricated in its entirety via automated AFP layup and/or 3D printing techniques.

FIG. 23 is a diagram illustrating an automated system 500' for fabricating acoustic paneling.. System 500'can include AFP machine 520', which includes a kinematic chain 522' of rigid bodies 521' and actuators 523' that reposition end effector 524' over a core 550' of acoustic cells 240'. End effector 524' includes dispenser 528', which dispenses thermoplastic CFRP and/or thermoplastic. Other 3D printable materials may also be used, such as-metals for metal structures. Dispenser 528' may comprise a dispenser which lays up tows of thermoplastic CFRP atop core 550'. Dispenser 528' may comprise a 3D printing device. As used herein, "thermoplastic CFRP" is a carbon fiber reinforced thermoplastic. The carbon fiber described herein may be long fiber CFRP in which multiple strands of carbon fiber are aligned parallel with each other and extend for long distances (e.g., centimeters or meters). The carbon fiber may comprise short "chopped fiber" having a random orientation.

End effector 524' further includes laser 526', which emits beam 527' of laser energy 599' (e.g., infrared (IR) heat energy). This laser energy 599' is utilized to fuse different layers of thermoplastic together. Laser 526' can follow dispenser 528' as AFP machine 520' continues in a direction of travel 598'.Hence, laser 526' is capable of directly radiating laser energy 599' onto locations (L) that have just been laid-up or printed in order to heat thermoplastic material 597' to a fusing temperature (e.g., a melting temperature). This facilitates rapid fusing in order to form an acoustic panel 200'.

FIG. 23 further illustrates controller 510' and memory 512'. Memory 512' stores Numerical Control (NC) program 514'. NC program 514' includes instructions that direct elements of kinematic chain 522' and end effector 524' in laying up portions of facesheet 530'. NC program 514' can further include instructions for operating laser 526'. These instructions may indicate when and where to activate laser 526', an amount of energy to radiate at each location where laser 526' is activated (e.g., to ensure sufficient heat transfer), etc.

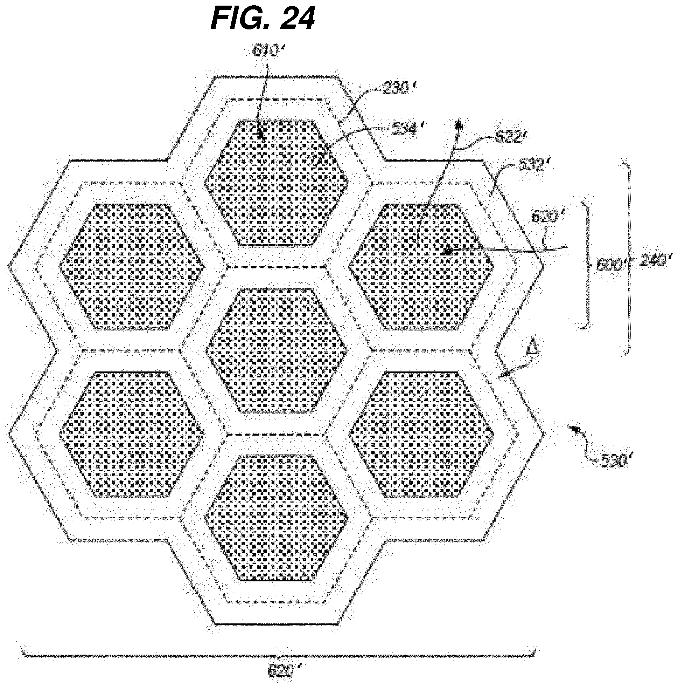

As shown in FIG. 23, facesheet 530' comprises multiple components. Base layer 536' comprises thermoplastic CFRP directly laid-atop core 550'. A surface 538' of core 550' is also visible. Base layer 536' may comprise multiple tows which have been laid-up in a pattern over core 550' of cells 240'. Base layer 536' can be 3D printed to form the pattern. In either case, the pattern follows walls 230' of cells 240', and leaves a gap/opening (shown as opening/gap 600' of FIG. 24) over each cell 240'. The opening enables acoustic energy to travel into and out of cell 240'. The next component is liner 534', which comprises porous thermoplastic. Porous thermoplastic liner 534' covers the openings over each cell 240' defined by base layer 536'. The porous nature of liner 534' enables acoustic energy to enter cell 240' for attenuation.

The final component laid-up by AFP machine 520' is cap layer 532', which comprises thermoplastic CFRP. Like base layer 536', cap layer 532' is laid-up in a pattern that leaves gaps/openings. This pattern may include openings which are shaped and arranged in order to provide low drag over acoustic cells 240' (i.e., a smooth(er) aerodynamic surface). The carbon fiber in cap layer 532' provides mechanical support to liner 534' without altering the fundamental acoustic properties of facesheet 530'. The patterns described herein may follow the contours of walls 230' at core 550', and are illustrated with regard to FIG. 24 below.

FIG. 24 is a top view of facesheet 530' indicated by arrows 6 of FIG. 23Cap layer 532' and liner 534' are visible, and cap layer 532' has been laid-up to form pattern 620. Walls 230' are located deep underneath cap layer 532', and liner 534' is visible at gaps/openings 600'. Gaps 600' are aligned with gaps/openings defined by base layer 536', and hence liner 534', which is permeable, is the only barrier between external acoustic energy and the internal portions of each cell 240'. Only locations where cap layer 532' has been dispensed are heated by laser 526' (as indicated by Δ on FIG. 24). Acoustic energy 620 travels into a cell 240' via an opening 600' and exits the opening 600' as attenuated acoustic energy 622'.

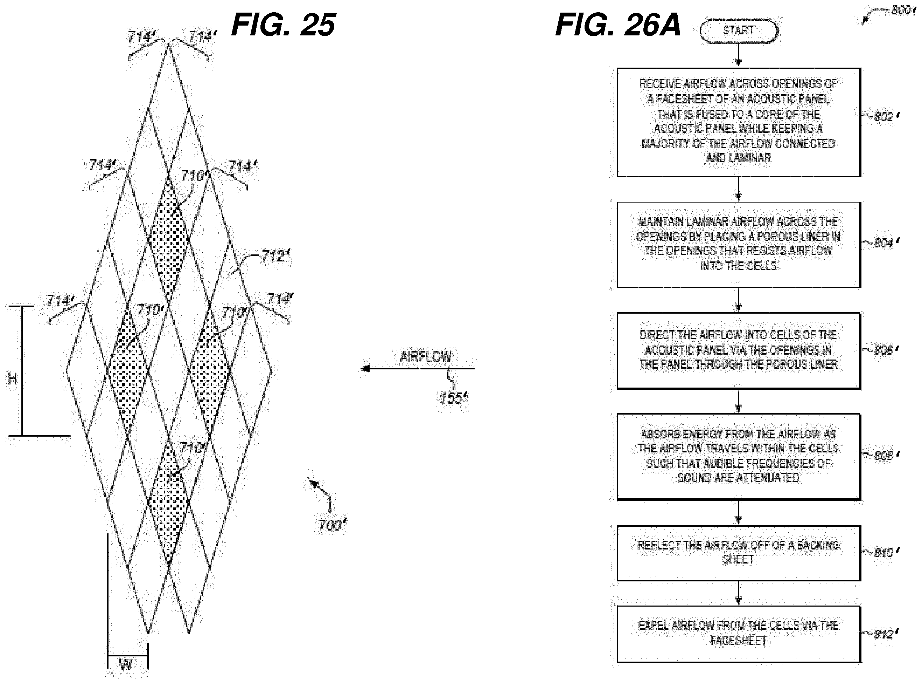

With the physical features of facesheet 530' described above, a method describing illustrative details of the operation of system 500' of FIG. 23 will be discussed with regard to FIG. 25. Assume, that a user has generated an NC program 514' which includes instructions for fabricating acoustic paneling from core 550' of cells 240'.

FIG. 25 is a top view of further acoustic paneling arranged in pattern 700'. Pattern 700' may comprise overlapping tows 714' which define openings 710' over corresponding diamond-shaped cells. The cells are bordered by CFRP 712'. As shown in FIG. 25, openings 710' are arranged with respect to airflow 155 such that the width (W, the dimension parallel to airflow 155) of each opening 710' is substantially smaller than the height (H, the dimension perpendicular to airflow 155) of each opening 710'. This helps to provide low drag. That is, by directing airflow 155 across the shorter dimension (i.e., width) of each opening 710', drag is reduced. Dispensing of the cap layer 532' can form the gaps/openings such that a width of each gap/opening parallel to expected airflow is less than a height of each gap perpendicular to expected airflow.

An acoustic panel 200' having pattern 700' may therefore include a core 550' comprising multiple cells 240' of thermoplastic having walls that are fused together, and a facesheet 530' fused to a surface 538' of core 550'. The facesheet 530' includes multiple openings 600' through which sound waves enter the cells, and a porous liner 534' within the openings provides acoustic control by keeping a majority of airflow across the openings connected and laminar, thereby reducing drag. Liner 534' is fused with the rest of facesheet 530', but remains porous.

Using the acoustic paneling described above, a method may be used for performing acoustic control of jet engine noise via an acoustic panel. This is illustrated with regard to method 800' of FIG. 26A. The method may include, for example, receiving airflow across openings of a facesheet 530' of the panel 200' that is fused to a multi-celled core 550' of the panel 200' while keeping a majority of the airflow laminar (step 802'). This includes maintaining laminar airflow across the openings by placing a porous liner in the openings that resists airflow into the cells (step 804'). That is, liner 534' provides some resistance to airflow entering the cell through the opening resulting in maintaining laminar flow across the openings. Thus, a majority of the airflow remains connected to itself (i.e., not disconnected, fragmentary, or turbulent) and laminar, thereby reducing drag and improving airplane performance, fuel burn etc. The method may also include directing the airflow into cells 240' of the acoustic panel 200' via the openings in the facesheet through a porous liner 534' (step 806'), and absorbing energy from the airflow as the airflow travels within the cells 240' such that audible frequencies of sound generated by the airflow are attenuated by the cells 240' (step 808'). The method may also include reflecting the airflow off of a backing sheet 220' for the cells 240' (step 810'), and expelling the airflow from the cells 240' via the facesheet 530' (step 812').

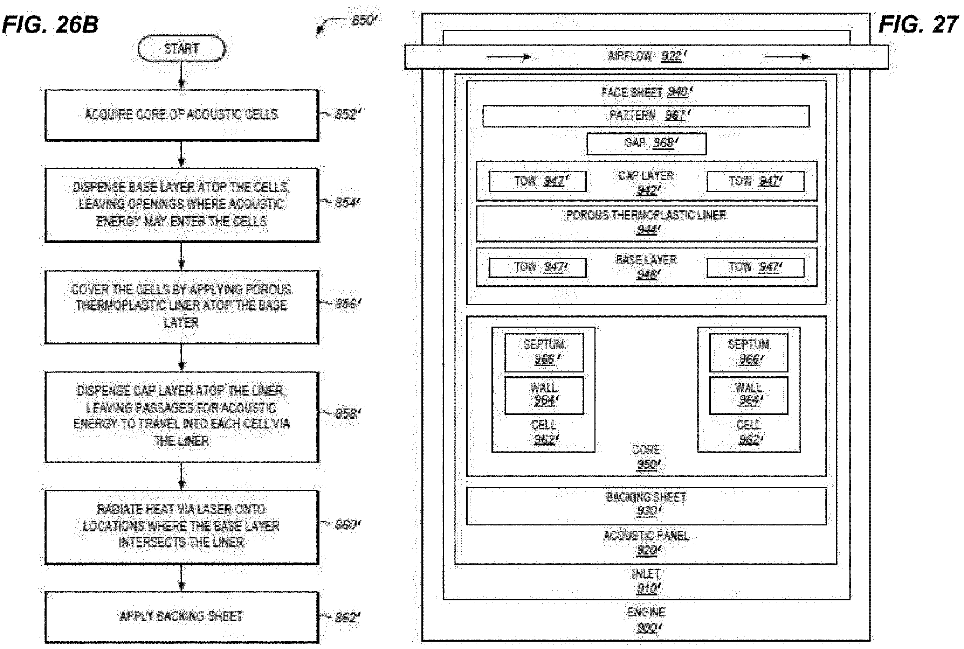

FIG. 26B is a flowchart illustrating a method 850' for fabricating acoustic paneling. The steps of method 850' are described with reference to system 500' of FIG. 23, but those skilled in the art will appreciate that method 850' may be performed in other systems. The steps of the flowcharts described herein are not all inclusive and may include other steps not shown. The steps described herein may also be performed in an alternative order.

In step 852', system 500' acquires core 550' of acoustic cells 240'. Core 550' may comprise a linear sheet of cells arranged in any suitable pattern (e.g., a tessellating pattern of hexagonal cells, triangular cells, square cells, etc.). Core 550' can be "open" in that it has neither a backing sheet nor a facesheet. Core 550' may therefore be made as a single extruded piece of thermoplastic, or may be 3D printed thermoplastic. Core 550' may be acquired by either placing core 550' in a desired location with respect to system 500', or by actively printing core 550' via system 500'. With core 550' acquired, a septum 400' may be inserted into each cell 240', or may even be 3D printed into each cell via dispenser 528'.

Where dispenser 528' is a 3D printing device, dispenser 528' may 3D print individual tows (comprising thermoplastic and carbon fiber) via a separate nozzle than for components which comprise only thermoplastic. When printing thermoplastic materials that are porous in nature (e.g., where a specific level of porosity is desired in order to provide acoustic performance (enabling acoustic energy to freely enter cells 240') while also ensuring smooth properties that enhance aerodynamics), a temperature of the dispensing nozzle, an amount of material ejected, an amount of ejection pressure, and/or a cooling time may be adjusted in order to fine tune the porosity to desired characteristics.

With cells 240' ready for creation of a facesheet, system 500' initiates fabrication of a facesheet 530' covering core 550' of acoustic cells 240' (step 854'). The facesheet includes three separate components. The first component is base layer 536', which is dispensed atop acoustic cells 240' by dispenser 528', and leaves openings 600' over cells 24 which allow acoustic energy to freely enter cells 240' (step 856'). After base layer 536' has been applied by dispenser 528', laser 526' may fused base layer 536' to core 550' by radiating beam 527' of laser energy directly onto locations at which layer 536' has been dispensed. This heats thermoplastic polymer within base layer 536', causing fusing (e.g., via melting) between base layer 536' and core 550'.

Next, cells 240' are covered by liner 534', which is applied atop base layer 536' (step 858'). Liner 534' can be applied as a continuous layer that covers gaps 600' as well as base layer 536'. Liner 534' can be a prefabricated sheet of thermoplastic having a known porosity (e.g., a percent open area of twenty to eighty percent). Liner 534'can be printed via dispenser 528'. Liner 534' attenuates acoustic energy while still enabling acoustic energy to flow into cells 240' for further attenuation. However, since liner 534' is porous, it may be desirable to enhance the structural strength of facesheet 530' (e.g., in order to ensure that materials impacting facesheet 530' do not remove substantial amounts of material from facesheet 530'.

In order to ensure that desired levels of structural strength are achieved for facesheet 530', controller 510' directs dispenser 528' to dispense cap layer 532' atop liner (step 860'). Cap layer 532' is laid up in the same pattern as base layer 536'. Because cap layer 532' includes carbon fiber, cap layer 532' is substantially stronger than liner 534'.

With the components of facesheet 530' fully in place, controller 510' operates laser 526' to radiate laser energy (e.g., IR heat) onto locations where cap layer 532' intersects liner 534' (step 862'). That is, heat applied via beam 527' of laser energy from laser 526' is sufficient to cause cap layer 532' to fuse with underlying components of facesheet 530' (e.g., liner 534' and base layer 536'). Controller 510' may perform this step substantially concurrently with the dispensing of layer 532', such that tows of CFRP are fused via laser 526' immediately after they are laid up. Alternatively, controller 510' may cause laser 526' to perform fusing via an entirely separate run from the run in which thermoplastic CFRP is dispensed. In either case, laser 526' is operated in such a manner that no laser energy is directly radiated onto liner 534' in gaps 600', as this could cause liner 534' to melt and become non-porous in such gaps. Thus, laser 526' selectively applies heat only to locations at which cap layer 532' overlaps liner 534'. As an additional step, a continuous backing sheet may be applied (e.g., via 3D printing or AFP tow layup) in order to complete the fabrication of cells 240'.

Method 850' provides an advantage over prior techniques in that it allows for rapid fabrication of large sets of acoustic cells. Furthermore, where 3D printing techniques are utilized, large sets of acoustic cells may be fabricated to fit complex 3D contours, such as those found along the interior of an engine cowling.

### Examples

In the following examples, additional processes, systems, and methods are described in the context of acoustic paneling for aircraft.

FIG. 27 is a block diagram of an engine 900' utilizing an acoustic panel 920'. Engine 900' is a component of an aircraft that provides thrust to lift the aircraft during flight. As shown in FIG. 27, acoustic panel 920' is located within inlet 910'. Panel 920' attenuates acoustic energy generated by the airflow 922' through engine 900'. Panel 920' includes backing sheet 930', and core 950' includes cells 962'. Each cell 962' performs attenuation of acoustic energy, and backing sheet 930' provides a backing for each cell 962'. Each cell 962' is surrounded by walls 964', and may include septum 966' for attenuating acoustic energy entering and/or exiting the cell. Gap 968' between pattern 967' for facesheet 940' are also shown. These gaps enable acoustic energy to enter and/or exit cells 962'. Furthermore, cells 962' are covered by facesheet 940', which includes cap layer 942' and base layer 946' of thermoplastic CFRP, as well as porous thermoplastic liner 944'. Facesheet 940' facilitates attenuation of acoustic energy by further attenuating acoustic energy which has entered a cell 962'. Cap layer 942' and base layer 946' include tow 947'. Airflow 922' travels across facesheet 940' and sound waves from airflow 922' are dampened/attenuated by cells 962'.

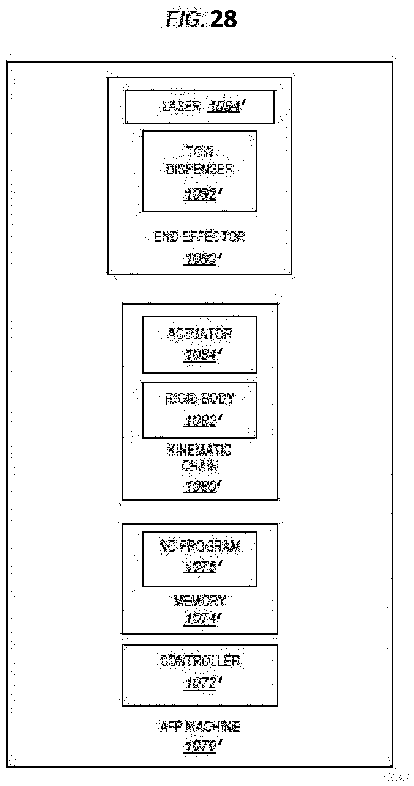

FIG. 28 depicts AFP machine 1070'. AFP machine 1070' may be utilized prior to insertion of acoustic panel 1020' into engine 900' in order to fabricate acoustic panel. Thus, AFP machine 1070' is located in a manufacturing and assembly environment, while engine 900' is utilized after manufacturing and assembly is complete and an aircraft is actively operating. AFP machine 1070' can include controller 1072' as well as memory 1074'. Controller 1072' may comprise any suitable component for controlling the operations of an end effector, and may comprise for example a hardware processor or custom circuitry. Memory 1074' comprises any suitable device capable of storing data for reading by a computer system, and stores Numerical Control (NC) program 1075' having instructions for operating end effector 1090'. The instructions may for example indicate how and where to move end effector 1090', as well as indicating when to activate dispenser 1092' and/or laser 1094'. Kinematic chain 1080' includes actuator 1084' and rigid body 1082' which operate in tandem to facilitate repositioning and/or reorienting end effector 1090' based on instructions in NC program 1075'. Here, end effector 1090' can includeboth dispenser 1092' and laser 1094'. Dispenser 1092' dispenses tows of material in order to form facesheet 940' of FIG. 28, and laser 1094' fuses cap layer 942', base layer 946', and/or liner 944' of FIG. 28 in order to adhere facesheet 940' to cells 962' of core 950' (as shown in FIG. 28).

Any of the various control elements (e.g., electrical or electronic components) shown in the figures or described herein may be implemented as hardware, a processor implementing software, a processor implementing firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, a control element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

## Claims

1. A method of producing an acoustic panel suitable for performing acoustic control of jet engine noise, the method comprising the steps of:
- conforming a sheet (500) of thermoplastic paper into rows (622, 624, 626) that each comprise a three dimensional shape,
- transforming the sheet into a multi-celled core (206) by:
- identifying fold lines separating the rows,
- folding the sheet (500) at the fold lines (630, 640) in a pleat fold, thereby uniting upper surfaces (621, 623) of adjacent rows (622, 624) and uniting lower surfaces (625, 627) of adjacent rows (624, 626) in the sheet (500), and
- compressing the rows (622, 624, 626) of the folded sheet (500) together in the presence of heat causing adjacent rows (622, 624, 626) to fuse together into hexagonal cells (240), each cell (240) including a double wall (230) defining a single side,
- heating core (206) and pressing double walls (230) resulting in double walls (230) plastically deforming and integrating into each other to create core (206) as a singly integral shape comprising unified, seamless walls (230) of thermoplastic material,
- applying a backing sheet (220) to the core (206);
- applying a facesheet (210) to a surface (241) of the core (206) that includes openings (1020) able to direct a portion of airflow (155) across the facesheet (210) into the cells (240), preferably wherein the facesheet (210) comprises a thermoplastic material; and wherein applying the facesheet (210) comprises:
∼ fusing the facesheet (210) to the surface (241) via the application of heat and pressure,
- and the method preferably further comprising the step of inserting a septum (1320) into each of the cells (240).

2. The method of claim 1, wherein:
the facesheet includes multiple slots that are each elongated in an expected direction of airflow across the facesheet; and
the method further comprises aligning the slots of the facesheet such that airflow may enter each cell of the acoustic panel via at least one of the slots.

3. The method of any of the preceding claims, further comprising:
installing the acoustic panel into a jet engine inlet such that flow through the inlet contacts the facesheet.

4. Method according to claim 1, further comprising the step of perforating the facesheet (210) at each of the cells (240).

5. The method of any of the preceding claims, further comprising:
laying up the facesheet as an open weave of linear tows, wherein the open weave includes at least one interstice per cell.

6. The method of any of the preceding claims, further comprising:
selecting audible frequencies of sound to attenuate via the acoustic panel; and
selecting a Percentage Open Area (POA) for the open weave that attenuates the selected frequencies of sound.

7. The method of any of the preceding claims, further comprising:
forming the facesheet as a layer of thermoplastic in contact with the surface of the core, a layer of open weave in contact with the layer of thermoplastic, and an additional layer of thermoplastic in contact with the open weave, or
further comprising:
forming the facesheet as a layer of open weave in contact with the surface of the core and an additional layer of thermoplastic in contact with the open weave.

8. The method of any of the preceding claims, further comprising:
inserting an acoustically controlling septum into each of the cells.

9. Method according to any of the claims 1 - 8, further comprising applying heat and pressure to the acoustic panel to facilitate plastic deformation of the acoustic panel, and conforming the acoustic panel to a contour while the acoustic panel is heated.

## Patentansprüche

1. Verfahren zur Herstellung einer Akustikplatte, die zur Durchführung einer Akustiksteuerung von Triebwerkslärm geeignet ist, wobei das Verfahren die folgenden Schritte umfasst:
- Anpassen eines Bogens (500) von thermoplastischem Papier in Reihen (622, 624, 626), die jeweils eine dreidimensionale Form umfassen;
- Umwandeln des Bogens in einen Kern (206) mit mehreren Zellen, und zwar durch:
- Identifizieren der Falzlinien, die die Reihen trennen,
- Falten des Bogens (500) an den Falzlinien (630, 640) in eine Zickzackfaltung, wodurch obere Flächen (621, 623) angrenzender Reihen (622, 624) in dem Bogen (500) vereinigt werden und untere Flächen (625, 627) angrenzender Reihen (624, 626) vereinigt werden,
- Zusammenpressen der Reihen (622, 624, 626) des gefalteten Bogens (500) unter Einwirkung von Hitze, wodurch bewirkt wird, dass angrenzende Reihen (622, 624, 626) zu hexagonalen Zellen (240) zusammenschmelzen, wobei jede Zelle (240) eine Doppelwand (230) aufweist, die eine einzelne Seite definiert, und
- Erhitzen des Kerns (206) und Pressen der Doppelwände (230), wodurch bewirkt wird, dass die Doppelwände (230) sich plastisch verformen und ineinander integrieren, um den Kern (206) als eine einzelne einstückige Form zu bilden, welche einheitliche, nahtlose Wände (230) aus thermoplastischem Material umfasst;
- Aufbringen eines Verstärkungsbogens (220) auf den Kern (206);
- Aufbringen einer Deckschicht (210) auf eine Oberfläche (241) des Kerns (206), wobei die Deckschicht Öffnungen (1020) enthält, die in der Lage sind, einen Teil eines Luftstroms (155) über die Deckschicht (210) in die Zellen (240) zu leiten, wobei die Deckschicht (210) vorzugsweise ein thermoplastisches Material umfasst, und wobei die Deckschicht (210) Folgendes umfasst:
- Zusammenschmelzen der Deckschicht (210) auf die Oberfläche (241) durch Aufbringen von Hitze und Druck;
- und wobei das Verfahren vorzugsweise weiterhin den folgenden Schritt umfasst: Einführen eines Septums (1320) in jede der Zellen (240).

2. Verfahren nach Anspruch 1, wobei:
die Deckschicht mehrere Schlitze aufweist, die in einer erwarteten Richtung des Luftstroms über die Deckschicht langgestreckt sind; und
das Verfahren weiterhin ein Ausrichten der Schlitze der Deckschicht umfasst, so dass der Luftstrom über wenigstens einen der Schlitze in jede Zelle der Akustikplatte eindringen kann.

3. Verfahren nach einem der vorhergehenden Ansprüche, das weiterhin Folgendes umfasst:
Installieren der Akustikplatte in einem Triebwerkseinlass, so dass eine durch den Einlass strömende Strömung mit der Deckschicht in Berührung kommt.

4. Verfahren nach Anspruch 1, das weiterhin den Schritt des Perforierens der Deckschicht (210) an jeder der Zellen (240) umfasst.

5. Verfahren nach einem der vorhergehenden Ansprüche, das weiterhin Folgendes umfasst:
Auflegen der Deckschicht als offenes Gewebe linearer Werge, wobei das offene Gewebe wenigstens einen Zwischenraum pro Zelle aufweist.

6. Verfahren nach einem der vorhergehenden Ansprüche, das weiterhin Folgendes umfasst:
Auswählen hörbarer Schallfrequenzen, die über die Akustikplatte gedämpft werden sollen; und
Auswählen eines Prozentsatzes offener Fläche (POA, Percentage Open Area) für das offene Gewebe, das die auswählten Schallfrequenzen dämpft.

7. Verfahren nach einem der vorhergehenden Ansprüche, das weiterhin Folgendes umfasst:
Bilden der Deckschicht als eine Schicht von Thermokunststoff, die mit der Oberfläche des Kerns in Berührung ist, eine Schicht offenen Gewebes, die mit der Schicht Thermokunststoff in Berührung ist, und eine zusätzliche Schicht von Thermokunststoff, die mit der Oberfläche des offenen Gewebes in Berührung ist; oder
das weiterhin Folgendes umfasst:
Bilden der Deckschicht als eine Schicht offenen Gewebes, die mit der Oberfläche des Kerns in Berührung ist, und eine zusätzliche Schicht von Thermokunststoff, die mit dem offenen Gewebe in Berührung ist.

8. Verfahren nach einem der vorhergehenden Ansprüche, das weiterhin Folgendes umfasst:
Einführen eines akustiksteuernden Septums in jede der Zellen.

9. Verfahren nach einem der Ansprüche 1 bis 8, das weiterhin Folgendes umfasst: Aufbringen von Hitze und Druck auf die Akustikplatte, um die plastische Verformung der Akustikplatte zu erleichtern, und Anpassen der Akustikplatte an eine Kontur, während die Akustikplatte erhitzt wird.

## Revendications

1. Procédé de production d'un panneau acoustique permettant d'effectuer une régulation acoustique du bruit d'un réacteur, le procédé comprenant les étapes consistant à :
- façonner une feuille (500) de papier thermoplastique en rangées (622, 624, 626) comprenant chacune une forme tridimensionnelle ;
- transformer la feuille en une âme à cellules multiples (206) par :
- identification de lignes de pliage séparant les rangées,
- pliage de la feuille (500) au niveau des lignes de pliage (630, 640) pour créer un plissé, de façon à unir des surfaces supérieures (621, 623) de rangées adjacentes (622, 624) et à unir des surfaces inférieures (625, 627) de rangées adjacentes (624, 626) de la feuille (500),
- compression des rangées (622, 624, 626) de la feuille (500) pliée les unes contre les autres en présence de chaleur, faisant ainsi en sorte que des rangées adjacentes (622, 624, 626) fusionnent pour former des cellules hexagonales (240), chaque cellule (240) présentant une double paroi (230) définissant un côté unique, et
- chauffage de l'âme (206) et pression des doubles parois (230) pour entraîner une déformation plastique des doubles parois (230) et leur intégration les unes aux autres pour créer une âme (206) constituée d'un seul tenant et comportant des parois (230) unifiées sans soudures en matériau thermoplastique ;
- appliquer une feuille de support (220) sur l'âme (206) ; et
- appliquer, sur une surface (241) de l'âme (206), une feuille protectrice (210) comportant des ouvertures (1020) aptes à diriger une partie de l'écoulement (155) sur la feuille protectrice (210) vers l'intérieur des cellules (240), ladite feuille protectrice (210) comprenant de préférence un matériau thermoplastique, et ladite application de la feuille protectrice (210) comprenant :
- la fusion de la feuille protectrice (210) sur la surface (241) par application de chaleur et de pression ;
et le procédé comprenant de préférence en outre l'étape consistant à insérer une cloison (1320) dans chacune des cellules (240).

2. Procédé selon la revendication 1, dans lequel :
la feuille protectrice comporte de multiples fentes qui s'étendent selon la direction escomptée de l'écoulement d'air sur la feuille protectrice, et
le procédé comprend en outre l'alignement des fentes de la feuille protectrice de manière que l'écoulement d'air puisse pénétrer dans chaque cellule du panneau acoustique par au moins une des fentes.

3. Procédé selon l'une quelconque des revendications précédentes, comprenant en outre :
l'installation du panneau acoustique dans une entrée de réacteur de manière que l'écoulement traversant l'entrée vienne au contact de la feuille protectrice.

4. Procédé selon la revendication 1, comprenant en outre l'étape consistant à perforer la feuille protectrice (210) au niveau de chacune des cellules (240).

5. Procédé selon l'une quelconque des revendications précédentes, comprenant en outre :
la confection de la feuille protectrice sous la forme d'un tissage ajouré de câbles linéaires, ledit tissage ajouré présentant au moins un interstice par cellule.

6. Procédé selon l'une quelconque des revendications précédentes, comprenant en outre :
le choix de fréquences sonores audibles à atténuer au moyen du panneau acoustique, et
le choix de la proportion des vides (POA, percentage open area) relative au tissage ajouré permettant d'atténuer les fréquences sonores choisies.

7. Procédé selon l'une quelconque des revendications précédentes, comprenant en outre :
la formation de la feuille protectrice sous la forme d'une couche de thermoplastique en contact avec la surface de l'âme, d'une couche de tissage ajouré en contact avec la couche de thermoplastique, et d'une couche de thermoplastique supplémentaire en contact avec le tissage ajouré, ou
comprenant en outre :
la formation de la feuille protectrice sous la forme d'une couche de tissage ajouré en contact avec la surface de l'âme, et d'une couche de thermoplastique supplémentaire en contact avec le tissage ajouré.

8. Procédé selon l'une quelconque des revendications précédentes, comprenant en outre :
l'insertion d'une cloison de régulation acoustique dans chacune des cellules.

9. Procédé selon l'une quelconque des revendications 1 à 8, comprenant en outre l'application de chaleur et de pression sur le panneau acoustique pour faciliter la déformation plastique du panneau acoustique, et le façonnement du panneau acoustique eu égard à un contour tandis que le panneau acoustique est chauffé.
